# EUROPEAN PATENT APPLICATION

(11) **EP 4 629 156 A1**
(43) Date of publication of application: **08.10.2025**
(21) Application number: 23897475.2
(22) Date of filing: 14.11.2023
(51) Int. Cl.: G06Q 30/0207, A63F 13/69, A63F 13/70

(54) **PROGRAM AND INFORMATION PROCESSING SYSTEM**

(30) Priority: 28.11.2022 JP 2022188922
(71) Applicant: COLOPL, INC., Tokyo 107-0052 (JP)
(72) Inventor: BABA, Naruatsu, Tokyo 107-0052 (JP)
(74) Representative: Gille Hrabal Partnerschaftsgesellschaft mbB Patentanwälte
(86) International application number: PCT/JP2023/040915
(87) International publication number: WO 2024/116824

(57) **Abstract**

This program causes a computer to function as: a control means for controlling the execution of a prescribed event; a first granting means for granting a first object to a user on the basis of the execution of the prescribed event; and a second granting means for granting to the user, on the basis of the execution of the prescribed event, a crypto-asset and/or a second object which can be exchanged for the crypto-asset.

## Description

### TECHNICAL FIELD

The present invention relates to a program and an information processing system.

### BACKGROUND ART

A game using a blockchain is known (refer to, for example, Non-Patent Literature 1). This type of game may be played to obtain a crypto asset.

### CITATION LIST

### Non-Patent Literature

Non-Patent Literature 1: "How to start STEPN - Comprehensive Analysis of Future Prospects| Methods to Earn and Play and Costs to Increase Level?" [online], [Search on Oct. 27, 2022], Internet <https://www.caica.jp/media/crypto/stepn-about/>

### SUMMARY OF INVENTION

### Technical Problem

There have been needs for improvement in the sustainability of this type of service.

In view of the above circumstances, it is an objective of the present invention to improve the sustainability of service.

### Solution to Problem

An embodiment of the present disclosure is a program causing a computer to function as a controlling means for controlling execution of a predetermined event, a first providing means for providing a user with a first object based on execution of the predetermined event, and a second providing means for providing the user with at least one of a crypto asset and a second object exchangeable with the crypto asset based on execution of the predetermined event. The first object is convertible to an NFT state.

### Advantageous Effects of Invention

According to the present invention, the sustainability of the service is improved.

### BRIEF DESCRIPTION OF DRAWINGS

Fig. 1 is a diagram showing a schematic configuration of a game system.
Fig. 2 is a block diagram showing functional configurations of the game system.
Fig. 3 is a diagram showing an example of a map.
Fig. 4 is a diagram illustrating the flow of obtainment and consumption of an asset.
Fig. 5 is a diagram illustrating a timeline related to acquisition and exploration of a dungeon.
Fig. 6 is a flowchart showing an example of a process related to generation of a dungeon and determination of a reward.
Fig. 7 is a flowchart showing an example of a process related to acquisition and exploration of a dungeon.

### DESCRIPTION OF EMBODIMENTS

Embodiments of the present invention will now be described with reference to the drawings.

### <Hardware Configuration of Game System>

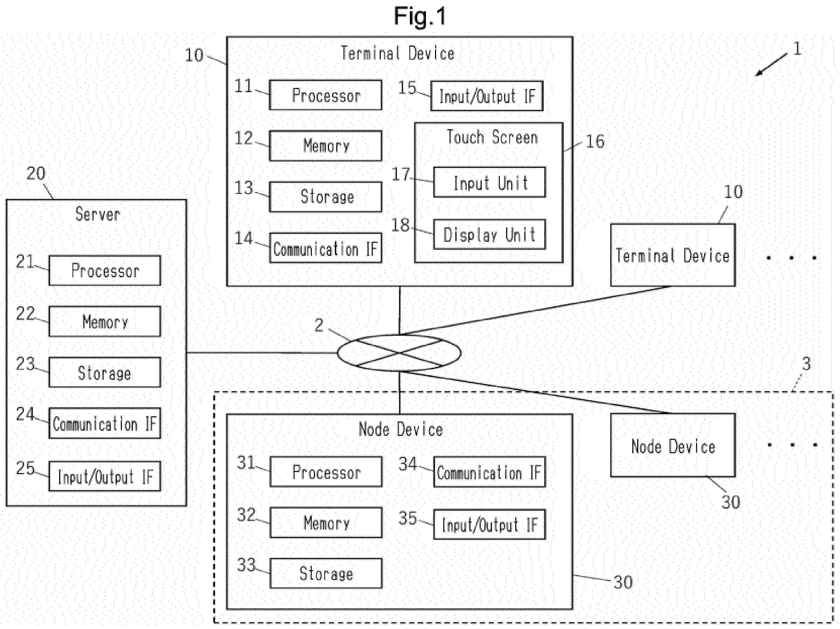

Fig. 1 shows the present embodiment of a game system 1 including multiple terminal devices 10, a server 20, and a blockchain system 3. The blockchain system 3 includes multiple node devices 30.

The terminal devices 10, the server 20, and the blockchain system 3 (i.e., the node devices 30) are connected to each other via a network 2. The network 2 may include, for example, any one or combination of the Internet, a mobile communication system (e.g., 3G, 4G, 5G, or Long Term Evolution (LTE)), Wireless Fidelity (WiFi), Bluetooth^{®}, and other communication lines.

The server 20 (i.e., a computer or an information processing device) may be, for example, a general-purpose computer such as a workstation or a personal computer. The server 20 includes a processor 21, memory 22, storage 23, a communication interface (IF) 24, and an input/output IF 25. The above-described components of the server 20 are connected to each other via a communication bus.

The processor 21 controls the overall operation of the server 20. The processor 21 may include a central processing unit (CPU), a micro processing unit (MPU), a graphics processing unit (GPU), and the like. The processor 21 retrieves a program from the storage 23 and loads the program in the memory 22. The processor 21 executes the loaded program.

The memory 22 is a main storage device. The memory 22 includes, for example, a storage device such as read only memory (ROM) and random access memory (RAM). The memory 22 temporarily stores the program and various types of data retrieved by the processor 21 from the storage 23 to provide the processor 21 with a working area. The memory 22 also temporarily stores various types of data generated while the processor 21 operates in accordance with the program.

In the present embodiment, the program may implement a game on the terminal device 10. The program may implement the game in cooperation with the terminal device 10 and the server 20. The program may implement the game in cooperation with the terminal device 10, the server 20, and the blockchain system 3. In an example, the game may be executed on a browser activated on the terminal device 10. In an example, the various types of data include game-related data such as user information and game information and instructions and notifications transmitted between devices such as the terminal device 10 and the server 20.

The storage 23 is an auxiliary storage device. The storage 23 includes, for example, a storage device such as flash memory or a hard disk drive (HDD). The storage 23 stores various types of data related to the game.

The communication IF 24 controls transmission of various types of data between the server 20 and the terminal device 10 or the like via the network. The communication IF 24 also controls transmission of various types of data between the server 20 and the blockchain system 3 (i.e., the node devices 30) via the network.

The input/output IF 25 is an interface for the server 20 to receive a data entry and to output data. The input/output IF 25 may include, for example, an input unit, which is an information input device such as a mouse or a keyboard, and a display unit, which is a device for outputting and displaying an image.

The terminal device 10 (i.e., a computer or an information processing device) may be, for example, a smartphone, a feature phone, a personal digital assistant (PDA), a tablet computer, a personal computer, a wearable terminal, or a game device. The terminal device 10 may be a mobile terminal. The terminal device 10 may be portable while a user executes a game.

Each terminal device 10 includes a processor 11, memory 12, storage 13, a communication IF 14, an input/output IF 15, an input unit 17, and a display unit 18. The above-described components of the terminal device 10 are connected to each other via a communication bus.

The processor 11 controls the overall operation of the terminal device 10. The processor 11 may include a CPU, an MPU, a GPU, and the like. The processor 11 retrieves a program from the storage 13 and loads the program in the memory 12. The processor 11 executes the loaded program.

The memory 12 is a main storage device. The memory 12 includes, for example, a storage device such as ROM and RAM. The memory 12 temporarily stores the program and various types of data retrieved by the processor 11 from the storage 13 to provide the processor 11 with a working area. The memory 12 also temporarily stores various types of data generated while the processor 11 operates in accordance with the program.

The storage 13 is an auxiliary storage device. The storage 13 includes, for example, a storage device such as flash memory or an HDD. The storage 13 stores various types of data related to the game.

The communication IF 14 controls transmission of various types of data between the terminal device 10 and the server 20 or the like via the network. The communication IF 14 may control transmission of various types of data between the terminal device 10 and the blockchain system 3 (i.e., the node device 30) via the network.

The input/output IF 15 is an interface for the terminal device 10 to receive a data entry and to output data. In an example, the input/output IF 15 may be input and output data via a universal serial bus (USB) or the like. The input/output IF 15 may include the input unit 17 or the display unit 18.

The input unit 17 receives an input from a user. The input unit 17 may be, for example, a pointing device such as a touchpad. The display unit 18 displays an image. The display unit 18 may be, for example, a liquid crystal display or an organic electroluminescence (EL) display. The terminal device 10 includes, for example, a touch screen 16, which is an electronic component obtained by combining the input unit 17 and the display unit 18.

The input unit 17 has a function to detect a position of an input surface that receives an operation (e.g., touch, tap, slide, swipe, flick, pinch-in, and pinch-out) performed by the user and to transmit information indicating the detected position as an input signal. The touch panel, which serves as the input unit 17, may use a capacitance system, a resistive system, or another system.

The input unit 17 may be, for example, a keyboard, various physical buttons, various sensors (e.g., acceleration sensor or angular velocity sensor), an operation stick, a camera, or a microphone. The display unit 18 may be, for example, a projector.

The node devices 30 form the blockchain system 3. Each node device 30 holds a distributed ledger. The node devices 30 each store the same data in the distributed ledger. As will be described in detail later, in the present embodiment, the distributed ledgers in the blockchain system 3 manage assets and the like possessed by the user.

The node device 30 (i.e., a computer or an information processing device) may be, for example, a general-purpose computer such as a workstation or a personal computer. Each node device 30 includes a processor 31, memory 32, storage 33, a communication IF 34, and an input/output IF 35. The above-described components of the node device 30 are connected to each other via a communication bus.

The processor 31 controls the overall operation of the node device 30. The processor 31 may include a central processing unit (CPU), a micro processing unit (MPU), a graphics processing unit (GPU), and the like. The processor 31 retrieves a program from the storage 33 and loads the program in the memory 32. The processor 31 executes the loaded program.

The memory 32 is a main storage device. The memory 32 includes, for example, a storage device such as read only memory (ROM) and random access memory (RAM). The memory 32 temporarily stores the program and various types of data retrieved by the processor 31 from the storage 33 to provide the processor 31 with a working area. The memory 32 also temporarily stores various types of data generated while the processor 31 operates in accordance with the program.

The storage 33 is an auxiliary storage device. The storage 33 includes, for example, a storage device such as flash memory or a hard disk drive (HDD).

The communication IF 34 controls transmission of various types of data between the node device 30 and the server 20 or the like via the network. The communication IF 34 may control transmission of various types of data between the node device 30 and the terminal device 10 via the network.

The input/output IF 35 is an interface for the node device 30 to receive a data entry and to output data. The input/output IF 35 may include, for example, an input unit, which is an information input device such as a mouse or a keyboard, and a display unit, which is a device for outputting and displaying an image.

The server 20 and the terminal devices 10 may function as the node devices 30. In other words, the blockchain system 3 may include the server 20 and the terminal devices 10.

### <Functional Configuration of Game System>

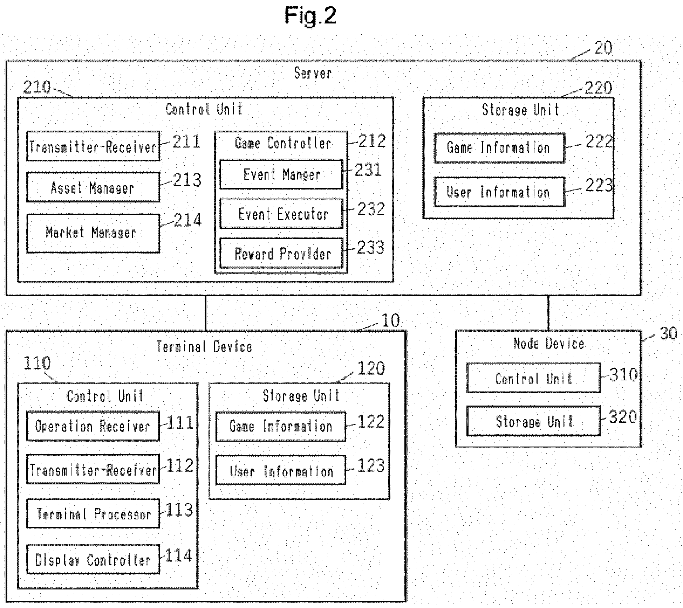

Fig. 2 is a block diagram showing functional configurations of the server 20, the terminal device 10, and the node device 30. In the present embodiment, the server 20 has, for example, a function to provide each terminal device 10 with various types of data and programs necessary for implementing a game and a function to manage game-related data collected from the terminal device 10.

In the present embodiment, the server 20 uses an account of a user registered in advance for each game to identify the user and the terminal device 10. The process of registering an account is not particularly limited. In an example, the user may operate the terminal device 10 or another device such as a personal computer to transmit information necessary for user account registration to the server 20. Then, the server 20 may create and store an account of each user based on the received information.

As shown in Fig. 2, the server 20 functions as a control unit 210 and a storage unit 220 when the processor 21, the memory 22, the storage 23, the communication IF 24, the input/output IF 25, and the like cooperate with each other. The storage unit 220 stores various types of data used by the control unit 210. The various types of data includes, for example, a program, game information 222, and user information 223. The program implements the game. The game information 222 and the user information 223 are data that is referred to when the control unit 210 executes the program.

The game information 222 includes, for example, information for defining various game spaces. The game space is a virtual space in which an object such as a character operable by the user (hereinafter, also referred to as an "operation character") is arranged. In the description hereafter, the object of a character arranged in the game space may be simply referred to as a "character." The game information further includes, for example, information related to the positions and setting values of various kinds of objects (including items) in the game space. The game information 222 further includes, for example, information for showing a view related to the game.

The user information 223 is managed for each game account. The user information 223 includes, for example, information related to the character of the user, information related to a possessed asset, information indicating the progress degree of the game, and information related to a dungeon (dungeon will be described later) acquired by the user (i.e., information indicating the right to execute an event). The possessed asset includes a token, an item A, an item B, and an item C, which will be described later. More specifically, for example, the information such as the token, the item A, the item B, and the item C possessed by each user may be stored in the storage unit 220 in association with identification information, which identifies the user.

The control unit 210 executes programs stored in the storage unit 220 to control various types of processes related to the game. The control unit 210 includes a transmitter-receiver 211, a game controller 212, an asset manager 213, and a market manager 214.

The transmitter-receiver 211 transmits or receives various kinds of data. The transmitter-receiver 211 receives, for example, a request for transmission of various types of data and programs from each terminal device 10, and transmits the request to the game controller 212, the asset manager 213, or the market manager 214. The transmitter-receiver 211 also transmits various types of data and programs to each terminal device 10 in accordance with control from the game controller 212, the asset manager 213, or the market manager 214.

The game controller 212 executes calculation processes written in the programs stored in the storage unit 220 to provide the game to the terminal device 10.

The asset manager 213 manages an asset possessed by the user. The asset manager 213 manages a portion or the entirety (i.e., at least portion) of the asset possessed by the user in the distributed ledger of the blockchain system 3. In other words, the asset manager 213 may store information related to the asset possessed by the user in the storage unit 220 or in the distributed ledger. When the server 20 functions as the node device 30, the storage unit 220 may store a distributed ledger, and the asset manager 213 may store the information related to the possessed asset in the distributed ledger of the storage unit 220. When the server 20 does not function as the node device 30, the asset manager 213 may execute control of transmitting a request related to storage in the distributed ledger to the blockchain system 3.

The terminal device 10 has, for example, a function as an input device receiving an input operation of the user and a function as an output device outputting images and sound of the game.

The terminal device 10 functions as a control unit 110 and a storage unit 120 when the processor 11, the memory 12, the storage 13, the communication IF 14, the input/output IF 15, and the like cooperate with each other. The storage unit 120 stores various types of data used by the control unit 110. The various types of data includes, for example, a program, game information 122, and user information 123. The program implements a game at the side of the terminal device 10. The game information 122 and the user information 123 are data that is referred to when the control unit 110 executes the program.

The game information 122 includes information similar to the game information 222 of the server 20 described above. Thus, the description of the game information 122 will be omitted.

The user information 123 is data related to the account of the user of the terminal device 10 and includes information similar to the user information 223 of the server 20 described above. Thus, the description of the user information 123 will be omitted.

The control unit 110 executes programs stored in the storage unit 120 to control various types of processes related to the game executed in the terminal device 10. The control unit 110 includes, for example, an operation receiver 111, a transmitter-receiver 112, a terminal processor 113, and a display controller 114.

The operation receiver 111 receives an operation (hereinafter, also referred to as "input operation") input by the user via the input unit 17. More specifically, when an input operation is performed on the input unit 17, the operation receiver 111 detects the coordinates where the input operation is performed and the type of the input operation. The type of the input operation includes, for example, various manual operations such as touch, tap, slide, swipe, flick, pinch-in, and pinch-out. The input operation is not limited to an operation that physically contacts the input unit 17 (e.g., touch screen 16) and may include a contactless operation. In addition, an operation that terminates the ongoing input operation, such as a touch-off operation, which ends the contact on the touch screen 16, may be an aspect of the input operation.

In addition, the operation receiver 111 may receive an input operation performed via an operation device connected by the input/output IF 15 in the same manner as an input operation performed via the input unit 17.

The transmitter-receiver 112 transmits and receives various kinds of data. The transmitter-receiver 112 transmits, for example, the game information 122 and the user information 123 to the server 20. In addition, the transmitter-receiver 112 receives various types of data and programs from the server 20. In addition, the transmitter-receiver 112 transmits operation information related to the input operation received by the operation receiver 111 to the server 20.

The terminal processor 113 executes various types of processes related to the progress of the game. A specific example will be described below.

The terminal processor 113 interprets an instruction of the user based on the coordinates of an input position and the type of the input operation detected by the operation receiver 111. Then, the terminal processor 113 executes various determination processes related to the progress of the game based on the interpreted instruction. The terminal processor 113 progresses the game while communicating with the server 20 based on the result of the determination processes and the like. In addition, the terminal processor 113 updates, adds, or deletes the game information 122 and the user information 123 in accordance with the progress of the game. The terminal processor 113 instructs the display controller 114 to display an image corresponding to the progress of the game on the display unit 18.

The display controller 114 causes the display unit 18 to show the image related to the game.

The node device 30 functions as a control unit 310 and a storage unit 320 when the processor 31, the memory 32, the storage 33, the communication IF 34, the input/output IF 35, and the like cooperate with each other. The storage unit 320 stores programs including a portion of the game program and a distributed ledger used in the blockchain system 3.

The control unit 310 executes the programs stored in the storage unit 320 to control the operation of the node device 30.

When the user acquires an item (including a specified token described later) (for example, acquired from another user or the administrator (e.g., acquired by executing an event described later)) and the control unit 310 receives a request transmitted from the server 20 to register information related to possession of the item, the control unit 310 registers the information in the distributed ledger. The control unit 310 may, for example, register information on the transaction history of each item in the distributed ledger based on information related to the transaction (i.e., transfer) of the item transmitted from the server 20 or the terminal device 10. More specifically, the distributed ledger stores multiple blocks including hash values and transaction data. The transaction data may be, for example, information indicating the transaction of the item. The transaction data includes, for example, input information indicating the source of the transfer and output information indicating the destination of the transfer. The hash value is calculated from information included in the previous block. Thus, the distributed ledger store the transaction history of each item and the like in a manner so that the blocks are linked like a chain by the hash value. When each node device 30 manages such transaction history of items in the distributed ledger, the blockchain store information indicating which user owns which item. Further, instead of the transaction history of items, information related to the possession state of items of each user may be managed in the distributed ledger so that the blockchain stores information indicating which user owns which item. As described above, in the game of the present embodiment, the possession information of items is stored in the blockchain. There may be an item, the possession information of which is not stored in the blockchain.

Fig. 2 shows examples of the functions of the terminal device 10, the server 20, and the node device 30. Each of the terminal device 10, the server 20, and the node device 30 may include at least part of the functions of another one of the terminal device 10, the server 20, and the node device 30. In other words, in the present embodiment, the server 20 or the node device 30 may include part or the entirety of the functional block of the terminal device 10. The terminal device 10 or the node device 30 may include part or the entirety of the functional block of the server 20. The terminal device 10 or the server 20 may include part or the entirety of the functional block of the node device 30. In addition, each of the terminal device 10, the server 20, and the node device 30 may be not implemented by an integrated device and may be implemented by, for example, multiple devices connected via a network or the like. Moreover, in an example, the terminal device 10, the server 20, or the node device 30 may be omitted from the game system 1.

### <Process Related to Present Embodiment>

The process of the present embodiment will be described. In the present embodiment, the processor 11 of the terminal device 10, the processor 21 of the server 20, or the processor 31 of the node device 30 execute programs stored in the game system 1 to execute each process described below. However, at least a portion of the process executed by the processor 11, which will be described later, may be executed by another processor (e.g., the processor 21 or the processor 31) differing from the processor 11. Also, at least a portion of the process executed by the processor 21, which will be described later, may be executed by another processor (e.g., the processor 11 or the processor 31) differing from the processor 21. Also, at least a portion of the process executed by the processor 31, which will be described later, may be executed by another processor (e.g., the processor 11 or the processor 21) differing from the processor 31. In other words, any one or combination of the terminal device 10, the server 20, and the node device 30 may a computer that executes a program in the present embodiment. Further, part or the entirety of various types of processes may be executed on the blockchain.

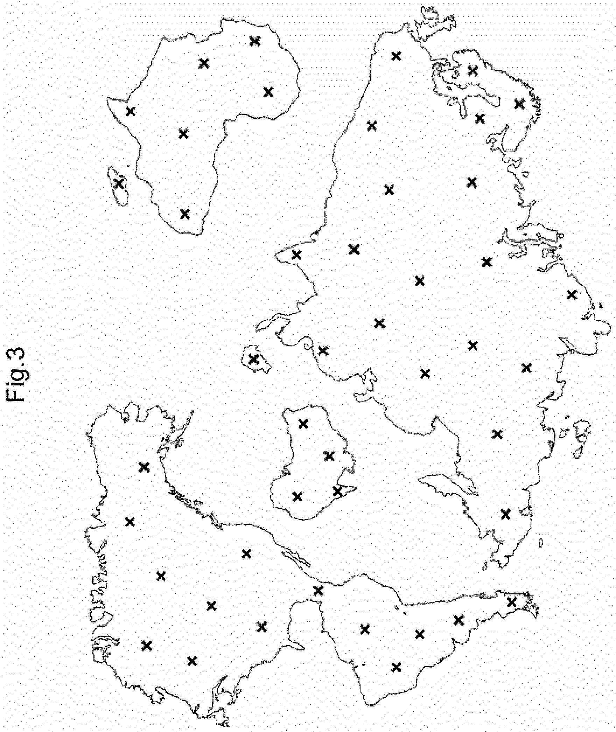

The overview of the game of the present embodiment will now be described. In the game of the present embodiment, the users (more specifically, all users) participating in the game share a common map. Further, multiple dungeons are arranged on the map. Fig. 3 shows an example of the map. In the map shown in Fig. 3, the position of each dungeon is indicated by a cross.

Each user acquires (i.e., selects) a dungeon, where the user explores (i.e., dungeon where an event is held), from the map. In an example, the acquisition of a dungeon may be performed by an operation (e.g., touching of the input unit 17) to select a specific dungeon on the map displayed on the display unit 18. In another example, the acquisition of a dungeon may be performed by an operation to move an operation character so that the operation character is guided to the position in the map (i.e., in virtual space) where a specific dungeon is arranged.

The user is allowed to explore the dungeon acquired by the user. In other words, the user is allowed to play a quest of the dungeon acquired by the user. In other words, when the user acquires a dungeon, the user is allowed to execute an event of exploring the dungeon. In the present embodiment, an event (or, a quest) refers to exploration of a dungeon. Alternatively, for example, the event may aim to defeat a predetermined character (e.g., a non-player character or a character operated by another user). The event may aim to win a predetermined sport or the like. The event may aim to view a predetermined content or watch a predetermined game. As described above, in the game of the present embodiment, when a predetermined condition is satisfied (i.e., when a dungeon is acquired), an event for pursuing a predetermined goal is allowed to be executed.

In the present embodiment, the game provides an item A used for exploring a dungeon. The user needs to possess the item A to explore the dungeon. In other words, the item A is necessary for participating in the game (i.e., for executing the event). In the present embodiment, the game provides different types of items A having a different characteristic. In addition, the item A is convertible to a non-fungible token (NFT) state. The NFT-converted state refers to a state in which information proving that the item A is unique is stored in the blockchain. In other words, the NFT-converted state refers to a state in which an NFT corresponding to the item A is issued and managed in the blockchain. In the description hereafter, a digital asset such as an item for which its corresponding NFT is issued will also be referred to as an NFT. In the present embodiment, conversion of the item A to an NFT (i.e., generation of the item A) is performed by the game administrator and cannot be performed by the user (in other words, cannot be minted by the user). In other words, the game is configured to prohibit the user from acquiring an item A that is not in the NFT state.

Further, in the game of the present embodiment, an item B and an item C are configured to be given to the user as a reward based on exploration of the dungeon. As will be described in detail later, the item B is convertible to an NFT state. The item C is exchangeable with a predetermined token. In the description hereafter, a token that is acquired in exchange for item C is referred to as a "specified token."

The game of the present embodiment provides different types of items B. Thus, the items B have a collection aspect. More specifically, the items B are monsters collected by the user. The item A is used for capturing a monster as the item B. Thus, the game of the present embodiment has a gameplay for exploring a dungeon using a captured item, as the item A, to capture and collect a monster, as the item B.

In addition, a specified token that is acquired in exchange for the item C is a crypto asset (e.g., virtual currency). In the game of the present embodiment, the specified token may be used for increasing the level of the item A, repairing (or, fixing) the item A, converting the item B into an NFT, and shortening various types of time.

The assets such as the item A, the item B, or the item C possessed by each user may be managed in the blockchain (i.e., distributed ledgers) regardless of whether the assets are NFT-converted.

The exploration of a dungeon as a predetermined event is performed, for example, as follows. That is, the exploration of a dungeon may be started when the user performs an operation instruction to start exploration of a dungeon acquired by the user. The exploration of the dungeon may be automatically advanced by the game controller 212. Alternatively, the game controller 212 may advance the exploration of the dungeon based on an operation of the user. That is, for example, when an operation is executed to instruct the start of the exploration of a dungeon, the exploration may advance without the need for a subsequent operation of the user, and the item B or the item C may be provided to the user as a reward for the exploration. Alternatively, for example, when an operation is executed to instruct to start the exploration of a dungeon, the user may explore in the dungeon (i.e., in the virtual space) by moving the operation character. When the user finds the item B or the item C arranged in the dungeon, the item may be provided to the user as a reward.

The probability of acquiring the item B during the exploration of the dungeon may be set to be lower than that of acquiring the item C. In other words, the item B may have a higher degree of rarity than the item C. In other words, the probability of acquiring the item B during the exploration of the dungeon may be set to be lower than that of acquiring a specified token. The item B may be configured not to be acquired in a single exploration. The item C may be configured to be always acquired in a single exploration. In the present embodiment, the quantity of items C (i.e., specified tokens) that can be acquired in any dungeon is similar.

The quality or quantity of items B or items C that can be acquired as a reward by the exploration of the dungeon may vary in accordance with the level or durability value of the item A used in the exploration. In an example, as the level of the item A is increased, item B with higher quality may be acquired, or the quantity (e.g., expected value of quantity) of item B or item C that can be acquired may be increased. In an example, the durability value may be set for the item A, and the durability value may decrease (e.g., the durability value is decreased from 100 toward 0) as the item A is used in the exploration. In addition, as the durability value decreases, an item B with higher quality may be less likely to be acquired or the quantity (e.g., expected value of quantity) of items B or items C that can be acquired may be decreased. Further, when the durability value reaches a predetermined value, the exploration of the dungeon using the item A may not be performed, or the item A may be broken and the durability value cannot be restored (e.g., the user may lose the item A). In such a case, the operation receiver 111 may receive an operation instruction to increase the level of the item A. Then, information related to the operation may be transmitted from the terminal device 10 to the server 20. The control unit 210 of the server 20 may perform a process of increasing the level of the item A based on the operation. In addition, a predetermined quantity of the specified token may need to increase the level of the item A. When the level of the item A is increased by the operation, the predetermined quantity of the specified token may be consumed. The operation receiver 111 may receive an operation performed by the user to instruct the restoration of the durability value of the item A (i.e., the repair of the item A). Then, information related to the operation may be transmitted from the terminal device 10 to the server 20. The control unit 210 of the server 20 may perform a process of restoring the level of the item A based on the operation. In addition, a predetermined quantity of the specified token may be needed to restore the durability value of the item A. When the durability level of the item A is restored by the operation, the predetermined quantity of the specified token may be consumed. That is, the specified token may be used to change a predetermined parameter related to the item A.

In the present embodiment, the game may provide an item that can be acquired through an acquisition route differing from that of the item A, the item B, and the item C. For example, an item (e.g., an item such as clothes (or, skin) wearable by the operation character) may be purchased in the game using in-game currency that is not a crypto asset (e.g., asset possessed by the user and managed by the storage unit 220 instead of being managed by the blockchain). The game currency may be purchased using legal currency.

In the present embodiment, various items (e.g., the item A, the item B, and the item C) may be read as objects. The objects include a character and an item. That is, the item B and the item C provided by the execution of the event may be a character or the like.

In the present embodiment, the map is updated (or, newly generated) at a predetermined period (specifically, once a day). In addition, the dungeon is also updated (or, newly generated) at a predetermined period (specifically, once a day) in accordance with the update of the map. Further, each dungeon may be acquired by only a single user. When a certain user acquires a certain dungeon, other users cannot acquire the certain dungeon. In other words, the dungeon is acquired on the first-come basis. The update of the map and the update of the dungeon may be a renewal of the former map and dungeon (i.e., a new map and dungeon are generated and the former map and dungeon are deleted), an expansion of the former map, or an addition of a new dungeon portion to a dungeon created in the past.

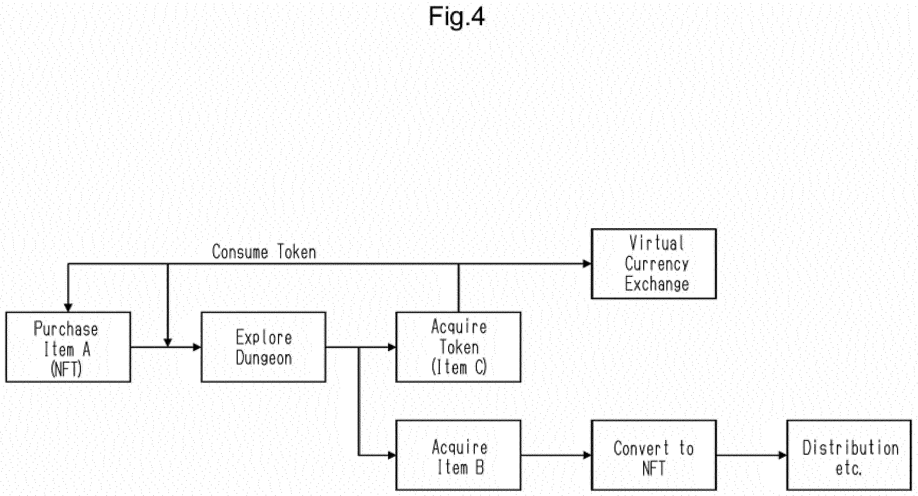

A flow of the obtainment and consumption of an asset in the game of the present embodiment will be described with reference to Fig. 4.

As described above, in the game of the present embodiment, a user needs to possess the item A in order to participate in the game. In the present embodiment, the item A may be purchased in a marketplace of the game. The user purchases the item A in the marketplace. The item A may be purchased with a predetermined crypto asset. The predetermined crypto asset may be a specified token that can be acquired in exchange for item C or may be another crypto asset. The market manager 214 manages transactions in the marketplace. More specifically, for example, the operation receiver 111 of the terminal device 10 receives an operation of selecting an item that the user wants to purchase. Then, information related to the operation is transmitted to the market manager 214 of the server 20 via the transmitter-receivers 112 and 211. Based on the operation, the market manager 214 executes a process of providing the user with the item selected by the user and providing compensation for the item from the user to the seller of the item.

The user explores the dungeon using the acquired item A. During the exploration of the dungeon, different types of items including the item B and the item C can be acquired.

The item C acquired by the user may be exchanged for the specified token. In order to exchange the item C for the specified token, a predetermined quantity of item C may need to be accumulated. In the present embodiment, the item C is provided to the user in the exploration of the dungeon, and the user exchanges the item C for the specified token. However, in addition to or instead of the item C, the specified token may be directly provided to the user in the exploration of the dungeon. In other words, the game may be configured to provide at least one of the item C and the specified token in the exploration of the dungeon. The phrase "provide at least one" includes a configuration in which the other one is not provided.

When the item C is exchanged for a specified token, the specified token may then be exchanged for another crypto asset (e.g., vertical currency) via a predetermined exchange (e.g., a decentralized exchange). The specified token is a utility token. The specified token is a unique token according to the game of the present embodiment, and the upper limit of issuance of the specified token is set. The specified token may be a virtual currency that can be used outside the game.

The item B acquired by the user is convertible into an NFT. That is, in the present embodiment, an NFT corresponding to the item B may be issued, and the NFT may be managed in the blockchain. More specifically, the operation receiver 111 of the terminal device 10 may receive an operation of selecting item B that the user wants to convert into an NFT in the game. Then, information related to the operation is transmitted to the asset manager 213 of the server 20 via the transmitter-receivers 112 and 211. Based on the operation, the asset manager 213 may execute a process of converting the selected item B into an NFT. In addition, a predetermined quantity of the specified token may need to execute the NFT conversion. When the item B is converted into an NFT by the operation, the predetermined quantity of the specified token may be consumed. The NFT-converted item B may be sold and purchased in the marketplace of the game. In other words, the conversion of an item into an NFT may refer to a conversion of the item to a state in which the item can be sold and purchased in the marketplace. More specifically, for example, the operation receiver 111 of the terminal device 10 may receive an operation of selecting the item B that the user wants to sell. Then, information related to the operation may be transmitted to the market manager 214 of the server 20 via the transmitter-receivers 112 and 211. The market manager 214 may sell the item selected by the user based on the operation. Then, when another user wants to purchase the item, the market manager 214 may execute a process of providing the item to the user and providing compensation for the item from the user to the seller of the item.

The item B may be exchangeable with the specified token. More specifically, the operation receiver 111 of the terminal device 10 may receive an operation selecting an item B that the user wants to exchange with the specified token in the game. Then, information related to the operation is transmitted to the server 20 via the transmitter-receivers 112 and 211. Based on the operation, the asset manager 213 may provide the specified token to the user in exchange for the selected item B. In other words, the item B may be convertible into an NFT and exchangeable for the specified token.

Multiple (for example, two) items B (i.e., NFTs) may be combined to generate a new item B (i.e., NFT). In other words, multiple items B may be used (i.e., burned) to generate (i.e., mint) a new item B. More specifically, multiple NFT-converted items B may be used to generate a new item B. That is, the operation receiver 111 may receive an operation of selecting multiple items B that the user uses for generating another item B in the game. Then, information related to the operation is transmitted to the asset manager 213 via the transmitter-receivers 112 and 211. Based on the operation, the asset manager 213 may use the selected items B to generate a new item B.

The item B does not have to be convertible into an NFT (i.e., be converted to an NFT state). The item B, which is an item (or, an object) differing from the item C, may be exchangeable for the specified token or other crypto assets. In the present embodiment, instead of the item B, the specified token or other crypto assets may be directly provided to the user in the exploration of the dungeon. The item B that is not converted to an NFT state (e.g., item B that does not have an NFT state) may be sold and purchased in the marketplace of the game.

The game controller 212 controls the game played by the user. The game controller 212 includes an event manager 231, an event executor 232, and a reward provider 233. In addition, the event manager 231 executes a map creation process of creating a map, a reward outline determination process of determining the outline of a reward, a dungeon creation process of creating a dungeon, and a reward detail determination process of determining the details of a reward.

In the present embodiment, various types of processes include a process having randomness. In the present embodiment, the process having randomness is implemented by executing a calculation using a predetermined seed. The predetermined seed includes a seed using the blockchain (e.g., a blockchain of Bitcoin) and a seed using the dungeon ID, which will be described later. However, the predetermined seed may include only one of the seeds. Specifically, in the present embodiment, two types of seeds using the blockchain (hereinafter referred to as "seedhlast" and "seedhfirst") are provided, and one type of seed using the dungeon ID (hereinafter referred to as "seedmdid") is provided.

More specifically, a seed related to the hash of the blockchain (specifically, e.g., a blockchain of Bitcoin) as the seed using the blockchain, and a seed related to the dungeon ID are used to implement randomness. In the present embodiment, the seed related to the hash includes hashlast_yyymmdd, which is the last hash (i.e., the hash value of the block that is generated last) of any period (e.g., one day), and hashfirst_yyyymmdd + 2, which is the first hash (i.e., the hash value of the block that is generated first) on the second day after the day on which hashlast_yyyymmdd was generated. In the present embodiment, the dungeon ID is used as the seed related to the dungeon ID. That is, in the present embodiment, seedhlast = hashlast_yyyymmdd, seedhfirst = hashfirst_yyyymmdd + 2, and seedmdid = dungeon.

In the present embodiment, a map and a reward are randomly determined based on various types of seed. The process of randomly determining predetermined elements such as the map or the reward based on a certain seed is known and thus will not be described.

In the map creation process, the event manager 231 creates a map. More specifically, the event manager 231 executes, as the map creation process, a process of determining the geography of a map (i.e., virtual world) including multiple dungeons and a process of determining the arrangement of each dungeon on the map. In the map creation process, the event manager 231 provides each dungeon in the created map with an ID (i.e., identification information referred to as "dungeon ID" hereafter) for identifying the dungeon. In other words, each dungeon in the created map is assigned with a unique dungeon ID. The dungeon ID may be configured of one or more numerals. In an example, serial numbers from 1 may be assigned to each dungeon.

In the present embodiment, the map is created at random. In other words, the map creation process has randomness. Specifically, the event manager 231 executes a calculation using a predetermined seed (hereinafter, referred to as a "map creation seed") to generate a random number, and determines the geography of the map and the arrangement of each dungeon in the map based on the random number. The map creation seed includes a seedhlast. In other words, the event manager 231 creates a map using a function in which seedhlast is designated as a parameter. That is, the event manager 231 creates a map in accordance with seedhlast (i.e., a hash of the blockchain).

In the reward outline determination process, the event manager 231 determines the outline of a reward in each dungeon. More specifically, as the reward outline determination process, the event manager 231 determines the number of rewards in each dungeon and the outline of the size of each reward (for example, three to five sizes such as small, medium, and large). Here, the reward includes the item B and the item C. More specifically, in the reward outline determination process, for example, a monster that is obtained during the exploration of the dungeon may be an item B, and the items B are determined to be five small monsters, three medium monsters, and one large monster. In the present embodiment, the item C is one type, and in the reward outline determination process, the number of items C obtained during the exploration of the dungeon is determined. However, different types of items C may be provided.

In the present embodiment, the outline of the reward (specifically, the number of rewards and the size of each reward) is determined at random. In other words, the determination of the outline of the reward has randomness. Specifically, the event manager 231 executes a calculation using a predetermined seed (hereinafter, referred to as "outline determination seed") to generate a random number, and determines the outline of the reward based on the random number. The outline determination seed includes seedhlast and seedmdid. In other words, the event manager 231 determines the outline of the reward using a function in which seedhlast and seedmdid are designated as parameters. In other words, the event manager 231 executes a predetermined lottery using seedhlast and seedmdid to determine the outline of the reward. When determining the outline of the reward for a dungeon, the event manager 231 uses the dungeon ID of the dungeon as seedmdid. That is, the event manager 231 determines, for each dungeon, the outline of the reward in accordance with seedhlast (i.e., a hash of the blockchain) and the dungeon ID of the dungeon.

In the dungeon creation process, the event manager 231 creates a dungeon as a three-dimensional virtual space that includes the reward determined in the reward outline determination process (i.e., three-dimensional virtual space where the reward is provided). Here, the creation of a dungeon may be determination of the structure of the dungeon. In other words, the dungeon creation process determines the difficulty level of the dungeon (specifically, the difficulty level of the exploration). In an example, in a configuration in which the dungeon is automatically explored, the time used for the exploration (i.e., the time from when the exploration starts until the exploration ends) may extend as the difficulty level is increased.

In the present embodiment, the dungeon is randomly created. In other words, the dungeon creation process has randomness. Specifically, the event manager 231 executes a calculation using a predetermined seed (hereinafter, referred to as "dungeon creation seed") to generate a random number, and creates the dungeon based on the random number. The dungeon creation seed includes seedhlast and seedmdid. Then, the event manager 231 creates a dungeon using a function in which seedhlast, seedmdid, and the outline of the reward determined in the reward outline determination process are designated as parameters. In other words, the event manager 231 executes a predetermined lottery using seedhlast and seedmdid to create a dungeon. When creating a dungeon, the event manager 231 uses the dungeon ID of the dungeon as seedmdid. When creating a dungeon, the event manager 231 uses the outline of the reward determined for the dungeon as a parameter. That is, the event manager 231 creates dungeons so that each dungeon corresponds to seedhlast (i.e., a hash of the blockchain), the dungeon ID of the dungeon, and the outline of the reward of the dungeon determined in the reward outline determination process.

In the reward detail determination process, the event manager 231 determines the details of the reward, which is determined in the reward outline determination process, acquired in each dungeon. Specifically, the event manager 231 determines details such as type, color, and size of the item B determined as the reward in the reward outline determination process. More specifically, for example, as described above, when the outline of the reward is determined as five small monsters, three medium monsters, and one large monster, the event manager 231 determines the type of each of the small monster, the medium monster, and the large monster as a dragon, a tiger, or the like. The event manager 231 also determines the color of each of the small monster, the medium monster, and the large monster is gold, blue, white, or another color. The event manager 231 also determines the detailed size of each of the small monster, the medium monster, and the large monster. For example, the body length is 50 meters, 100 meters, or the like.

In the present embodiment, the details of the reward (specifically, type, color, and detailed size of the item B) are determined at random. In other words, the determination of the reward detail has randomness. More specifically, the event manager 231 executes a calculation using a predetermined seed (hereinafter, referred to as "detail determination seed") to generate a random number, and determines the details of the reward based on the random number. The detail determination seed includes seedhfirst and seedmdid. Then, the event manager 231 determines the details of the reward using a function in which seedhfirst, seedmdid, and the outline of the reward determined in the reward outline determination process are designated as parameters. In other words, the event manager 231 executes a predetermined lottery using seedhfirst and seedmdid to determine the details of the reward. When determining the details of the reward for a dungeon, the event manager 231 uses the dungeon ID of the dungeon as seedmdid. When determining the details of the reward for a dungeon, the event manager 231 uses the outline of the reward determined for the dungeon as a parameter. More specifically, the event manager 231 determines the details of the reward for each dungeon in accordance with seedhfirst (i.e., a hash of the blockchain), the dungeon ID of the dungeon, and the outline of the reward for the dungeon determined in the reward outline determination process.

As described above, in the present embodiment, the detail (some contents such as type or quantity) of the item B that may be provided based on the exploration of the dungeon is not fixed until the reward detail determination process is executed. The detail (some content such as type or quantity) of the item C (i.e., specified token) that may be provided based on the exploration of the dungeon may be fixed at a point in time when the reward outline determination process is executed (i.e., before the right to execute the event is given to the user). In the reward outline determination process and the reward detail determination process, while the outline and the details of the item B as a reward are determined, for example, the type and quantity that may be assigned to the item C (or the specified token) based on the exploration of the dungeon may be determined by a process (process differing from the reward outline determination process) using a seed differing from the outline determination seed and the detail determination seed at a point in time when the reward outline determination process is performed. In this case, unlike the reward outline determination process and the reward detail determination process, the logic of the process of determining the item C and the seed used in the process may be configured not to be stored or published on the blockchain (the publication of the reward outline determination process and the reward detail determination process will be described later). In other words, the seed used for the process may not be a seed using the blockchain (for example, seed related to a hash of the blockchain).

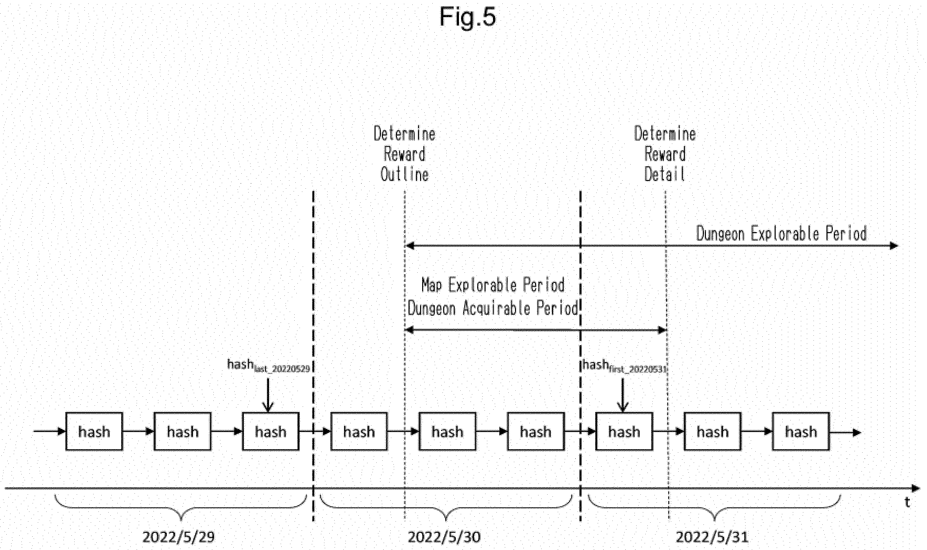

A timeline related to acquisition and exploration of a dungeon will be described with reference to Fig. 5. In this example, hashlast_20220529, which is a hash generated last on May 2, 2022, is used as seedhlast. Hashfirst_20220531, which is a hash generated first on May 31, 2022, is used as seedhfirst. Generation of a map and a dungeon and determination of a reward will be described as an example.

First, the event manager 231 performs the map creation process using the last hash on May 29, 2022 to create a map. The last hash on May 29, (i.e., the last block) is fixed after the date of the time stamp included in the block of the blockchain is changed to May 30. In other words, seedhlast is fixed by the generation of the first hash (i.e., the first block) on May 30, 2022. Therefore, in the present embodiment, the event manager 231 creates a map using hashlast_20220529 at a point in time when the first hash is generated on May 30 (i.e., after the hash is generated).

The event manager 231 executes the reward outline determination process using the last hash on May 29, 2022, and determines the outline of the reward of each dungeon. The event manager 231 executes a dungeon creation process using the last hash on May 29, 2022, and creates a dungeon including the reward determined in the reward outline determination process. In the present embodiment, the event manager 231 determines the outline of the reward using hashlast_20220529 at a point in time when the first hash is generated on May 30 (i.e., after the hash is generated). Further, the event manager 231 creates a dungeon using hashlast_20220529 at the point in time when the first hash is generated on May 30 (i.e., after the hash is generated).

In addition, the event manager 231 performs control to limit a period during which a dungeon is acquirable. In the present embodiment, the dungeon acquirable period is set between the generation of the first hash of the day (the fixing of seedhlast related to the last hash of the previous day) and the generation of the first hash of the next day (the fixing of seedhfirst related to the hash). In other words, the event manager 231 controls the period during which the dungeon created using hashlast_20220529 is acquirable to be the period until the details of the reward for the dungeon are determined. Further, in other words, when a dungeon (i.e., a map) is created, the created dungeon is acquirable until the next time when a dungeon (i.e., a map) is created. The dungeon acquirable period may be set, for example, from when the first hash of the day is generated until the end of the day (i.e., the day on which the dungeon was generated).

The event manager 231 executes the reward detail determination process using the first hash on May 31, 2022, and determines the details of the reward for which the last hash on May 29, 2022 is used to determine the outline. In the present embodiment, the event manager 231 determines the details of the reward using hashlast_20220531 at a point in time when the first hash is generated on May 31 (i.e., after the hash is generated). That is, the event manager 231 determines the details of the reward related to the dungeon after the dungeon acquirable period ends. In other words, the event manager 231 performs control that prohibits acquisition of the dungeon after the details of the reward is determined.

The dungeon in which the outline and details of the reward are determined as described above is provided to the user based on an operation of the user. The user is allowed to explore the dungeon.

When the user performs an operation of selecting a dungeon to explore, the event manager 231 provides the selected dungeon to the user based on the operation. In other words, the event manager 231 provides the user with the right to explore the dungeon selected by the user (i.e., the right to execute the event). Specifically, for example, the operation receiver 111 of the terminal device 10 receives an operation of selecting a dungeon to explore from the multiple dungeons in the map. In other words, the operation receiver 111 receives an operation to acquire a specific dungeon from the multiple dungeons. In other words, the operation receiver 111 receives an operation related to acquisition of the right to execute a specific event (specifically, exploration of a specific dungeon). In the present embodiment, the user is allowed to explore the dungeon acquired by the user. The acquisition of the dungeon may be referred to as the acquisition of the right to execute the exploration of the dungeon (i.e., the event). The provision of the right to execute the event may be such that the event (for example, the exploration of the dungeon) is executable as a result. That is, the provision of the right to execute the event may be referred to as a process of validating the execution of the event by the user.

When an operation of acquiring a dungeon is received, the display controller 114 causes the display unit 18 to show information related to a reward that is acquirable in the exploration of the dungeon. Specifically, for example, the terminal processor 113 receives information related to the outline of the reward of the dungeon from the event manager 231 and causes the display unit 18 to display the number of rewards that can be acquired in the exploration of the dungeon and the outline of the size of each reward based on the information. More specifically, in an example, in a configuration in which acquisition of a dungeon is executed by an operation of selecting a specific dungeon on the map displayed on the display unit 18, when a specific dungeon is selected on the map, the display unit 18 may show information related to a reward that is acquirable in the exploration of the specific dungeon. The user may view the information and then choose whether or not to acquire the specific dungeon. In another example, in a configuration in which acquisition of a dungeon is executed by an operation of moving an operation character so that the operation character is guided to a position in the map where a specific dungeon is arranged, when the operation character is moved to the position where the specific dungeon is arranged, the display unit 18 may show information related to a reward that is acquirable in the exploration of the specific dungeon. The user may view the information and then choose whether or not to acquire the specific dungeon. That is, in the present embodiment, before the user acquires the right to execute the event, the event manager 231 presents information related to a reward that is acquirable by the execution of the event to the user. The information is displayed on the display unit 18. The presentation of the information is not limited to direct indication of the outline of the acquirable reward and may be indirect indication (for example, indicating expectation degree related to the quantity or quality of the acquirable reward).

The event manager 231 stores information indicating the dungeon acquired by the user in the blockchain (e.g., a blockchain of Ethereum). Specifically, when a user acquires a dungeon, the event manager 231 stores information indicating that the user has acquired the dungeon in the blockchain. That is, in the present embodiment, the history related to the acquisition of the dungeon by the user is stored in the blockchain. In other words, in the present embodiment, information related to the right to execute the event possessed by the user is stored in the blockchain. Such a configuration prevents acquisition of a dungeon, an item, or the like using a fraudulent process. More specifically, in the present embodiment, the right to acquire a reward is obtained by acquiring a dungeon (i.e., the right related to the execution of the event) having a limited acquirable period, and the information indicating the dungeon acquired by the user is stored in the blockchain, which hampers tampering. With this configuration, when a user acquires an item using a fraudulent process, the user will be revealed to not have the dungeon acquisition information that allows for acquisition of the item. This proves the fraud of the user. In addition, in the present embodiment, the dungeon acquisition information is stored in the blockchain, which hampers rewriting, and the details of the reward are determined after the dungeon acquirable period ends. Thus, fraudulent acquisition of the item is more securely prevented.

The event executor 232 starts the exploration of the dungeon acquired by the user based on an operation to instruct the start of the exploration of the dungeon by the user. That is, the operation receiver 111 receives an operation instruction to execute (i.e., start) a predetermined event by a user who has the right related to execution of the predetermined event (i.e., exploration of specific dungeon). Then, information related to the operation is transmitted to the event executor 232 via the transmitter-receivers 112 and 211, and the event executor 232 starts the predetermined event based on the operation. Specifically, for example, the display unit 18 shows the information related to the dungeon acquired by the user. When the information is displayed, the operation receiver 111 may receive an operation instruction to start the exploration of the dungeon.

In the game of the present embodiment, the exploration of a dungeon is allowed after the outline of the reward is determined and the dungeon is created. The exploration is also allowed before the details of a reward are determined. The exploration of the dungeon is also allowed after the details of the reward are determined.

The event executor 232 automatically advances the exploration of a dungeon. That is, for example, when the operation receiver 111 receives an operation for instructing to execute an event, the event executor 232 advances the event without the need for an operation of the user. Specifically, the event (or, exploration of dungeon) is configured to be terminated when a predetermined period (e.g., several hours) elapses from the start of the event. The predetermined period may be shortened when the user chooses to consume the specified token. The event may be terminated immediately after the start of the event. The event executor 232 may advance the exploration of a dungeon based on an operation of the user. Specifically, for example, after an operation to instruct to execute an event is performed, the operation receiver 111 may receive an operation of moving the operation character in the dungeon (i.e., in virtual space) (i.e., an operation of searching for items arranged in the dungeon) so that when the user finds an item, the item is provided to the user as a reward.

The reward provider 233 provides a reward to the user based on the exploration of the dungeon. In other words, the reward provider 233 provides a reward to the user based on the execution of the event. Specifically, in the present embodiment, the exploration of the dungeon is automatically advanced. When the exploration is terminated, the item B and the item C found in the exploration are provided to the user. In another example, when the exploration of the dungeon is manually advanced, each time the user operates the operation character to find the item B or the item C in the dungeon, the found item may be provided to the user as a reward. At least some of the rewards provided based on the execution of the event may be provided as a reward for the exploration, instead of being found by the exploration.

A point in time when the provision of the item B and the item C is determined based on the exploration of the dungeon (i.e., for example, a point in time when the exploration of the dungeon is terminated) may be before or after the details of the reward (more specifically, the details of item B) are determined. Thus, there are two timing patterns. In other words, each of when the exploration of the dungeon is automatically performed and when the exploration of the dungeon is manually performed, the details of the reward may not have been fixed at the point in time when the provision of the reward is determined. More specifically, in the present embodiment, before the details of a monster as the item B are determined, the monster as the item B may be found by the exploration of the dungeon (i.e., the provision of item B is determined) (while the details of item B is unknown). In this regard, when the provision of the item B is determined (i.e., when the item B is found) before the details of the reward are determined, the reward provider 233 does not provide the item B at the point in time when the provision of the item B is determined (i.e., for example, at a point in time when the exploration of the dungeon is terminated), and provides the item B as the reward after the details of the item B are determined. In other words, in the present embodiment, the details of a reward are configured to be determined after the dungeon acquirable period (i.e., period in which the right to execute an event is acquirable) as a predetermined period ends, and the exploration of the dungeon (i.e., an event) is executed during the dungeon acquirable period and the provision of the reward may be determined. However, when the provision of the reward is determined during the dungeon acquirable period, the reward provider 233 may provide the reward after the details of the reward are determined. In the present embodiment, "providing a reward after the details of the reward are determined" means providing a specified monster as the item B having the fixed detail. In other words, the case of "providing a reward after the details of the reward are determined" may include, for example, a configuration that provides an item alternative to the specified monster as the item B (e.g., an item or the like indicating that a monster will be provided after the detail is determined) before the details of the reward are determined.

In the present embodiment, the creation of the map, the creation of the dungeon, the determination of the outline of the reward, and the determination of the details of the reward are executed every day. Thus, the map and the dungeon are updated daily. More specifically, for example, in the example shown in Fig. 5, the last hash on May 30 is used to execute the map creation process, the reward outline determination process, and the dungeon creation process. Then, the first hash on June 1 is used to execute the reward detail determination process on a reward, the outline of which has been determined in the reward outline determination process. In the present embodiment, the next update of the map and the dungeon are performed after the dungeon acquirable period ends. Alternatively, the next update of the map and the dungeon may be performed during the dungeon acquirable period. In other words, a hash differing from the last hash and the first hash may be used to create the map, create the dungeon, determine the reward outline, or determine the reward detail.

In the present embodiment, the hash generated last on each day is used to create the map and the dungeon and to determine the reward outline. However, the hash generated last on the day (i.e., the last block of the day) is determined after the first hash of the next day (i.e., the first block of the next day) is generated. Therefore, the creation of the map, the creation of the dungeon, and the determination of the reward outline are executed at or after the point in time when the first hash of the next day is generated. Hence, the first hash of the next day may be used to execute the creation of the map, the creation of the dungeon, and the determination of the reward outline. However, in the present embodiment, the hash generated last on the day is used to execute the creation of the map, the creation of the dungeon, and the determination of the reward outline. Thus, the determination of the reward detail is executed based on a hash differing from the hash used to execute the creation of the map and the dungeon and the determination of the reward outline. That is, when processes related to the creation of the map, the creation of the dungeon, and the determination of the reward, and the like are executed every day, the hash used to determine the details of a reward, the outline of which is determined on the previous day, differs from the hash used to determine the outline of a reward on the present day. In other words, in the present embodiment, the game controller 212 determines the details of a reward by using a specific hash (specifically, the first hash of day) within any repeatedly coming period, and determines the outline of the reward by using a hash (specifically, the last hash of day) differing from the specific hash. The blockchain may fork. In this regard, in the present embodiment, at a point in time when the first hash of the next day is generated, the hash generated last on the present day is used to create the map and the dungeon and determine the reward outline. Therefore, the process may be executed using a hash (or, block) that is highly likely to have been adopted.

In the game of the present embodiment, a lottery logic related to the item B is stored and published on the blockchain. Specifically, the logic of the reward outline determination process and the reward detail determination process is published as a smart contract. That is, the logic of a process of determining the outline of the reward using seedhlast is published as a smart contract. Also, the logic of a process of determining the details of the reward using seedhfirst is publicized as a smart contract. Also, seedhlast and seedhfirst are hashes of the blockchain and are published seeds. That is, in the present embodiment, the outline of a reward that is acquirable in each dungeon is determined by a predetermined logic using a predetermined seed. The predetermined seed and the predetermined logic are published. Thus, the user may use the published predetermined seed and the published predetermined logic to check whether the outline of the reward is fraudulently determined. In the present embodiment, the details of a reward that are acquirable in each dungeon is determined by a predetermined logic using a predetermined seed. The predetermined seed and the predetermined logic are published. Thus, the user may use the published predetermined seed and the published predetermined logic to check whether the details of the reward are fraudulently determined. With such configurations, intentions of the administrator are excluded from the provision of the reward. This provides a highly transparent system that clearly shows this to the user. In addition, the hash of the blockchain is used as a seed. Thus, the seed cannot be predicted even by the administrator and is defined and clear to anyone. That is, with the configuration of the present embodiment, the provision of the reward cannot be controlled even by the administrator, may be checked by the user using the published logic, and cannot be predicted in advance. This prevents occurrence of a fraud in the provision of an item and damage on the value of the system. In addition, in the present embodiment, a random number related to the determination of the outline or the details of the reward is determined based on the hash of the blockchain and the random number can be specified. Thus, a fraud of manipulating the random number may be recognized. This obviates a fraud such as presenting a predetermined object by manipulating a random number. The logic of the dungeon creation process may be stored and publicized on the blockchain or may be unpublicized and not be stored on the blockchain.

The item A possessed by the user may be lent to another user. More specifically, when a first user lends item A to a second user, the operation receiver 111 of the terminal device 10 of the second user may receive an operation, from the second user, instructing to execute an event that the first user has the right to execute. Then, information related to the operation is transmitted to the event executor 232 via the transmitter-receivers 112 and 211, and the event executor 232 starts the event based on the operation performed by the second user. Thus, even the second user, who does not possess the item A, is allowed to play the game by borrowing the item A. In this case, the reward provider 233 may provide the user who lent the item A with a portion of the reward obtained in the event executed based on the operation of the second user. With this configuration, a user who lends the item A cooperates with another user in completing the dungeon and thus receives an advantage of effective completion. The user who borrows the item has an advantage of participating in the game without purchasing the item A.

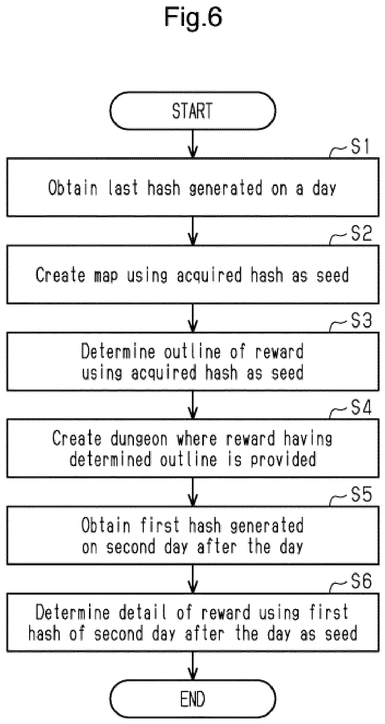

A process related to creation of a dungeon and determination of a reward will be described with reference to the flowchart shown in Fig. 6.

The event manager 231 acquires the last hash generated on a day from a particular blockchain (step S1). Next, the event manager 231 uses the acquired hash as a seed (specifically, seedhlast) to perform calculation and create a map (step S2). Specifically, the event manager 231 determines the geography of a map and the arrangement of dungeons in the map and also provides an ID for identifying each dungeon in the map.

The event manager 231 determines the outline of a reward in each dungeon of the map created in step S2 (step S3). Specifically, the event manager 231 performs a calculation using the hash acquired in step S1 and the dungeon ID of each dungeon as seeds (specifically, seedhlast and seedmdid), and determines the number of rewards of each dungeon and the outline of the size of each reward.

The event manager 231 creates a dungeon in which the reward, the outline of which is determined in step S3, is provided (i.e., a dungeon including the reward) (step S4). Specifically, the event manager 231 performs a calculation using the hash acquired in step S1 and the dungeon ID of each dungeon as seeds (more specifically, seedhlast and seedmdid), and creates a dungeon.

The event manager 231 acquires the first hash generated on the second day after the day on which the hash acquired in step S1 is generated (step S5). The event manager 231 determines the details of a reward in each dungeon of the map created in step S2 (step S6). Specifically, the event manager 231 performs a calculation using the hash acquired in step S5 and the dungeon IDs of each dungeon as seeds (more specifically, seedhfirst and seedmdid), and determines the type, color, and specific size of the item B as a reward in the dungeon.

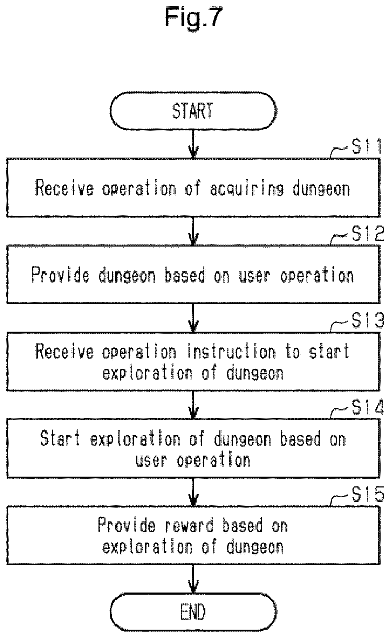

A process related to acquisition and exploration of a dungeon will be described with reference to the flowchart shown in Fig. 7.

The operation receiver 111 of the terminal device 10 receives an operation of acquiring a dungeon that is to be explored from multiple dungeons in the map (step S11). In other words, the operation receiver 111 receives an operation of selecting a specific dungeon from the multiple dungeons. In other words, the operation receiver 111 receives an operation related to acquisition of the right to execute a specific event (specifically, exploration of a specific dungeon).

When an operation of acquiring a dungeon to be explored is performed, the event manager 231 provides the specific dungeon to the user based on the operation (step S12). In other words, the event manager 231 provides the user with the right to execute the event based on the operation of the user.

The operation receiver 111 receives an operation instruction to start exploration of the dungeon acquired by the user (step S13). In other words, the operation receiver 111 receives an operation instruction, from the user, to execute an event that the user has the right to execute.

The event executor 232 starts the exploration based on the operation performed by the user to instruct to start the exploration of the dungeon (step S14). In other words, the event executor 232 executes an event based on the operation performed by the user to instruct the execution of the event. The event that is executed may be advanced by the event executor 232 in response to an operation of the user (i.e., manual operation) or may be advanced automatically by the event executor 232 without an operation of the user. Moreover, the user may be allowed to select whether to advance the event manually or automatically.

The reward provider 233 provides a reward to the user based on the exploration of the dungeon (step S15). In other words, the reward provider 233 provides a reward to the user based on the execution of the event. Specifically, the reward provider 233 provides the item B and the item C based on the exploration of the dungeon.

In the present embodiment, the items, the tokens, and the various logics (i.e., smart contracts) are managed on the same blockchain. Alternatively, the items, the tokens, and the various logics may be partially managed on different blockchains. The hashes used for various types of processes may be in the same blockchain or may be in different blockchains. The blockchain may be an existing blockchain such as Ethereum or Bitcoin. The NFT corresponding to the item A or the item B (i.e., NFT-converted item A or item B) may be bridged from the issued blockchain to another blockchain.

Each configuration in the present embodiment may be applied to contents (i.e., a service) other than the game according to the present embodiment.

The present invention is not limited to the above-described embodiment, and various modifications can be made without departing from the scope of the present invention. In the present invention, the components may be freely combined or modified, or some of the components may be omitted within the scope of the invention. The flow of processes described in the present specification is merely an example. The order or configuration of each process may be changed.

### Clauses

The elements in the above embodiment may also be described as in the following clauses.

### [Clause 1]

A program causing a computer to function as: a controlling means (e.g., event executor 232) for controlling execution of a predetermined event; a first providing means (e.g., reward provider 233) for providing a user with a first object based on execution of the predetermined event; and a second providing means (e.g., reward provider 233) for providing the user with at least one of a crypto asset and a second object exchangeable with the crypto asset based on execution of the predetermined event, in which the first object is convertible to an NFT state.

This configuration provides a service providing a crypto asset or an object exchangeable with a crypto asset based on execution of the predetermined event, that is, a service from which a crypto asset is obtained based on execution of the predetermined event. This type of service has a characteristic of encouraging the mind of a user to desire to earn crypto assets. As a result, the crypto assets may be earned more than consumed. This decreases the value of the crypto assets and collapses economy. In other words, there have been needs for improvement in the sustainability of this type of service. With the configuration described above, an object convertible to an NFT state may be obtained in addition to a crypto asset based on execution of the predetermined event. Distribution of the NFT-converted objects revitalizes economy, thereby improving the sustainability of the service.

### [Clause 2]

The program according to clause 1, in which a probability of providing the first object in the predetermined event is lower than a probability of providing the crypto asset or a probability of providing the second object in the predetermined event.

This configuration increases the rarity value of the first object, thereby avoiding decreases in the value of the first object and decreases in the sustainability of the service.

### [Clause 3]

The program according to clause 1, further causing the computer to function as an exchanging means for exchanging the first object possessed by the user with the crypto asset.

This configuration strengthens the connection between the first object and the crypto asset and revitalizes economy, thereby improving the sustainability of the service.

### [Clause 4]

The program according to any one of clauses 1 to 3, further causing the computer to function as an NFT-converting means (e.g., asset manager 213) for consuming the crypto asset to convert the first object into an NFT.

With this configuration, the crypto asset needs to be consumed to convert the first object into an NFT and distribute the NFT-converted first object. Thus, the asset of the user is balanced between obtainment and consumption. This improves the sustainability of the service.

### [Clause 5]

An information processing system including: a controlling means (e.g., event executor 232) for controlling execution of a predetermined event; a first providing means (e.g., reward provider 233) for providing a user with a first object based on execution of the predetermined event; and a second providing means (e.g., reward provider 233) for providing the user with at least one of a crypto asset and a second object exchangeable with the crypto asset based on execution of the predetermined event.

This configuration has the same operation and advantages as the program described in clause 1.

### REFERENCE SIGNS LIST

1) game system; 3) blockchain system; 10) terminal device; 11) processor; 12) memory; 13) storage; 14) communication IF; 15) input/output IF; 16) touch screen; 17) input unit; 18) display unit; 20) server; 21) processor; 22) memory; 23) storage; 24) communication IF; 25) input/output IF; 30) node device; 31) processor; 32) memory; 33) storage; 34) communication IF; 35) input/output IF; 110) control unit; 111) operation receiver; 112) transmitter-receiver; 113) terminal processor; 114) display controller; 120) storage unit; 210) control unit; 211) transmitter-receiver; 212) game controller; 213) asset manager; 214) market manager; 220) storage unit; 231) event manager; 232) event executor; 233) reward provider; 310) control unit; 320) storage unit

## Claims

1. A program causing a computer to function as:
a controlling means for controlling execution of a predetermined event;
a first providing means for providing a user with a first object based on execution of the predetermined event; and
a second providing means for providing the user with at least one of a crypto asset and a second object exchangeable with the crypto asset based on execution of the predetermined event,
wherein the first object is convertible to an NFT state.

2. The program according to claim 1, wherein a probability of providing the first object in the predetermined event is lower than a probability of providing the crypto asset or a probability of providing the second object in the predetermined event.

3. The program according to claim 1, further causing the computer to function as an exchanging means for exchanging the first object possessed by the user with the crypto asset.

4. The program according to any one of claims 1 to 3, further causing the computer to function as an NFT-converting means for consuming the crypto asset to convert the first object into an NFT.

5. An information processing system comprising:
a controlling means for controlling execution of a predetermined event;
a first providing means for providing a user with a first object based on execution of the predetermined event; and
a second providing means for providing the user with at least one of a crypto asset and a second object exchangeable with the crypto asset based on execution of the predetermined event.
